## Europäisches Patentamt

## European Patent Office

## Office européen des brevets

(11) Publication number: **0 057 979**

**B1**

(12) EUROPEAN PATENT SPECIFICATION

(45) Date of publication of patent specification: **28.11.84**

(51) Int. Cl.³: **B 01 D 11/02**

(21) Application number: **82300223.3**

(22) Date of filing: **15.01.82**

(54) Apparatus for extracting soluble constituents from cut plant material.

(30) Priority: **21.01.81 DE 3101768**

(43) Date of publication of application:
**18.08.82 Bulletin 82/33**

(45) Publication of the grant of the patent:
**28.11.84 Bulletin 84/48**

(84) Designated Contracting States:
**BE CH FR GB IT LI NL**

(56) References cited:
**BE-A- 536 103**
**GB-A- 512 660**
**US-A-2 264 390**

(73) Proprietor: **FABRIQUES DE TABAC REUNIES S.A.**
**Quai Jeanrenaud 3 P.O. Box 11**
**CH-2003 Neuchâtel (CH)**

(72) Inventor: **Friedrich, Hermann**
**Faubourg 20**
**CH-1580 Avenches (CH)**
Inventor: **Ruf, Claude**
**Ch. des Polonars 37**
**CH-2016 Cortaillod (CH)**
Inventor: **Brosy, Jacques**
**Avenue des Alpes 3**
**CH-2000 Neuchatel (CH)**

(74) Representative: **Bass, John Henton et al**
**REDDIE & GROSE 16 Theobalds Road**
**London WC1X 8PL (GB)**

Courier Press, Leamington Spa, England.

EP 0 057 979 B1

## Description

The invention relates to apparatus for extracting soluble constituents from cut plant or vegetable material, and in particular tobacco.

Known apparatus for extracting cut plant material comprises a conduit having two portions rising from a depressed central region towards respective ends, and conveyor screws within the two portions acting to convey the plant material from one end of the conduit to the other in countercurrent to a flow of extracting liquid therethrough, the liquid inlet and liquid overflow being disposed to establish a liquid level in the conduit above the cross-section of the central region but below the two ends.

Examples of such apparatus are described in BE—A—536 103 where, for the purpose of extracting sugar from beet or other material, a conduit having two branches of unequal length inclined in the form of a 'V' is provided, unconnected and separately driven screw conveyors being provided in the shorter branch and in two successive lengths of the longer branch. In US—A—2 264 390, apparatus for solvent extraction of oils, fats or waxes from soya beans, seeds or animal sources comprises a long extractor tube inclined at 10 to 25° from the horizontal, which is directly connected at its lower end to a short riser tube inclined from the vertical towards the long tube by not more than 25°, screw conveyors being provided for moving solid material downwardly through the long tube and upwardly through the short tube.

Both these extraction devices are intended for the extraction of valuable soluble constituents from materials that yield relatively worthless solid residues. With tobacco, in contrast, it is the solid residue that is the valuable product. It is now the object of this invention to provide apparatus of the aforementioned type that is particularly suited to the continuous elution of cut tobacco material at low cost.

In accordance with this invention the apparatus is characterised in that the conduit (4) comprises two straight pipe portions (1, 2) each slightly inclined to the horizontal and joined together with an angle (6) between them of 140 to 170°, and that the conveyor screws constitute two portions (7, 8) of a single screw conveyor which are coupled together by a cardan joint (9) and for which a common drive (12) is provided at one end (20) of the conduit.

Whilst the plant material advanced by the conveyor travels through the conduit in one direction, the eluant liquid flows in the opposite direction. Thus, the plant material must traverse the central pipe portion of which part is completely filled with the liquid, thereby ensuring that all the plant material comes into intimate contact with the liquid, the efficiency of the extraction being assisted by the countercurrent.

In a preferred embodiment, intense extraction is obtainable with a relatively short residence time of the plant material within the apparatus. This embodiment employs a conveyor in the form of a rotary shaft drivable in the conduit, which has circular internal cross-section. Helical flights are mounted on the shaft with sliding clearance from the inner surface of the conduit walls.

It is advantageous that in the embodiment the conveyor has no axially moving parts which require to be returned empty in the opposite direction. The helices not only transport the plant material, but also have a pumping and squeezing action on it and during the conveying process the plant material is compressed and stress-relieved to varying degrees by the helices. This pumping action has proved to be very advantageous for the extraction process.

It is desirable to transport the plant material as uniformly as possible through the complete conduit. A steep downward gradient towards the central pipe portion and a corresponding steep upward gradient following the central pipe portion has proved disadvantageous. The upward and downward slopes have a small angle, so that a central pipe portion of adequate length is completely filled with washing liquid. An angle of rise or fall with respect to the horizontal of 5 to 20° and preferably 10° has proved very satisfactory. With appropriate dimensions of the conduit as to length and diameter, the filling with liquid of sufficiently long central pipe portion can be achieved even with such a gentle slope.

The conduit comprises two straight pipe portions, with an angle between them of 140 to 170°, preferably 160°, which are joined together to form the conduit, while the screw conveyor is formed of two shaft portions coupled together by a cardan joint at the bend, for which a common drive is provided at one end of the conduit.

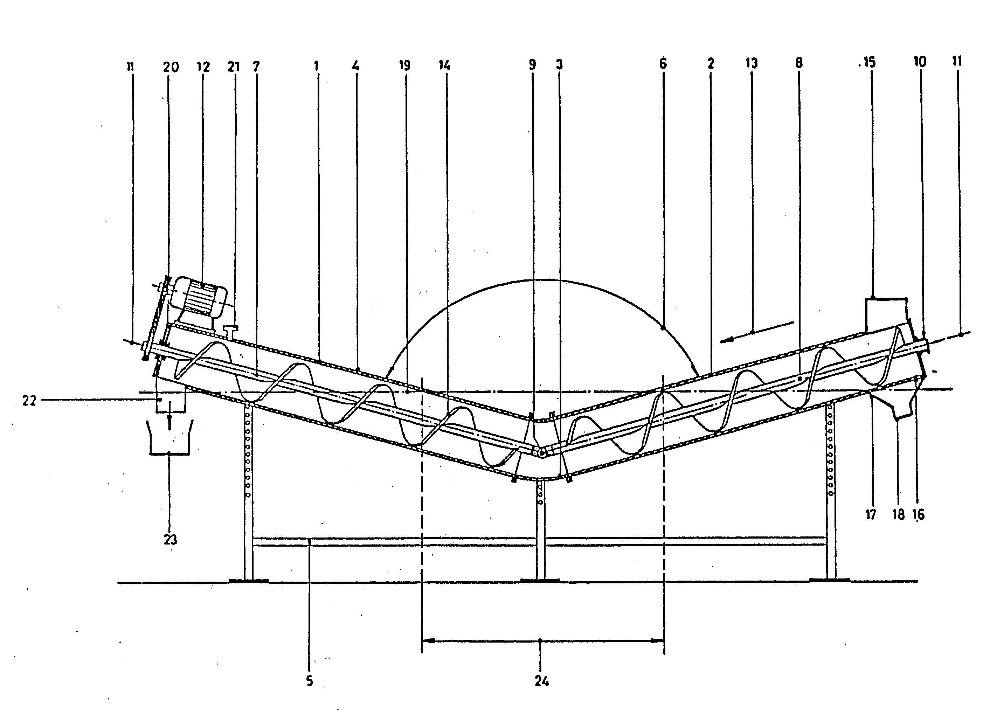

The invention will now be described in greater detail hereinafter with reference to the drawing, the single figure of which is a partial section of an apparatus according to the invention.

In the drawing, two straight pipes 1 and 2, having the same circular cross-section throughout, are joined together by means of a bend 3 to form a conduit 4. The two pipes 1 and 2 are mounted in a frame 5 in such a way that they together form an upwardly open angle 6 of 160°. Within the two pipes 1 and 2 and coaxially therewith are mounted rotary shaft portions 7 and 8 coupled together with a cardan joint 9 in the vicinity of the bend 3. The shafts are rotatable about axes 11 by a drive 12 arranged at the plant material output end 20 of the conduit 4 and can thus convey the material in the direction of the arrow 13. Helical flights 14 are mounted on the shafts with clearance within the pipes 1 and 2 and the bend 3 so as to be slidable past the internal wall surfaces of the pipes

At the input end 10, the wall of the pipe has an upward opening 15 used for charging the plant material, e.g. tobacco ribs, to be extracted. In the region of the opening 15, the pipe wall is formed by a screen 16, which gives access to a collecting funnel 17 fitted below the pipe end, from which extends an extract discharge line 18. The lower edge of the screen 16 defines the overflow level 19 for the eluant liquid.

At the material output end 20 is provided a liquid supply connection 21 and a downwardly directed opening 22, which gives access to a collecting tank 23 below and serves as a discharge means for the washed plant material.

The arrangement is such that the opening 22 and supply connection 21 are located above the overflow level 19 and that the central pipe portion 24 is completely below the level 19, that is, the entire pipe cross-section in the central region is below the liquid level and is therefore filled with liquid during operation. The plant material traverses the conduit 4 in the direction of the arrow 13 and the eluant liquid flows in the opposite direction. The plant material must necessarily pass through the liquid in the central pipe portion 24 to reach the output end 20.

As a modification of the embodiment shown the two pipes can have different lengths and diameters. It is also possible to use pipes whose internal diameter widens conically in one or both directions.

The eluant liquid can be water, or water mixed with additives, e.g. potassium phosphate. However, the liquid can also be constituted by a solvent liquid other than water, e.g. methyl alcohol. The eluant can also be a mixture of the aforementioned liquids.

## Claim

Apparatus for extracting soluble constituents from cut plant material comprising a conduit (4) having two portions (1, 2) rising from a depressed central region (24) towards respective ends (10, 20), and conveyor screws (7, 8) within the two portions acting to convey the plant material from one end of the conduit to the other in countercurrent to a flow of extracting liquid therethrough, the liquid inlet (21) and liquid overflow (16, 17, 18) being disposed to establish a liquid level (19) in the conduit above the cross-section of the central region but below the two ends characterised in that the conduit (4) comprises two straight pipe portions (1, 2) each slightly inclined to the horizontal and joined together with an angle (6) between them of 140 to 170°, and that the conveyor screws constitute two portions (7, 8) of a single screw conveyor which are coupled together by a cardan joint (9) and for which a common drive (12) is provided at one end (20) of the conduit.

## Patentanspruch

1. Anordnung zum Extrahieren löslicher Stoffe aus einem zerteilten pflanzlichen Material, mit einer zwei Teile (1, 2) aufweisenden Rohrleitung (4), welche Teile ausgehend von einem zentralen unteren Bereich zu den zugeordneten Enden hin ansteigend angeordnet sind, und in den beiden Teilen angeordnete Förderschrauben (7, 8) zum Fördern des pflanzlichen Materials vor dem einem Ende der Rohrleitung zum anderen Ende in der Gegenrichtung zue einer Strömung von Extrahierflüssigkeit durch einen Eingang (21), die Rohrleitung und einen Ueberlauf (16, 17, 18), wobei der Eingang und der Ueberlauf so angeordnet sind dass sich der Flüssigkeitsspiegel (19) oberhalb des zentralen Bereiches der Rohrleitung aber unterhalb der beiden Enden befindet, dadurch gekennzeichnet, dass die beiden Teile der Rohrleitung (4) gerade Rohrteile (1, 2) sind, die gegenüber der Horizontalen leicht geneigt und miteinander so verbunden sind, dass die einen Winkel (6) von 140 bis 170° einschliessen, dass von den Förderschrauben je eine in einem der Rohrteile angeordnet und über ein Kardangelenk (9) verbunden sind, dass sie einen Winkel (6) von 140 Rohrleitung ein Antrieb (12) zum gemeinsamen Antreiben der Förderschrauben vorhanden ist.

## Revendication

1. Dispositif d'extraction de produits solubles d'une substance végétale coupée, comprenant un conduit (4) en deux parties (1, 2) s'étendant en montant à partir d'une région centrale basse (24) vers ses deux extrémités (10, 20) et des transporteurs à vis (7, 8) dans chacune des dites parties, capables de transporter la dite substance d'une extrémité du conduit à l'autre à contre-courant par rapport à un écoulement d'un liquide d'extraction qui le traverse, l'entrée (21) et la sortie (16, 17, 18) du liquide étant disposées de manière à établir une surface de niveau (19) de liquide dans le conduit à une hauteur située au-dessus de la section de la region centrale mais au-dessous des extrémités, caractérisé en ce que le conduit (4) comprend deux segments de tubes rectilignes (1, 2) chacun légèrement incliné par rapport à l'horizontale et reliés l'un à l'autre sous un angle (6) compris entre (140° et 170° et en ce que les vis des transporteurs forment deux parties (7, 8) d'un transporteur unique et sont accouplées par un joint de, cardan (9), un moyen d'entraînement (12) commun aux deux vis étant prévu à un extrémité du conduit (20).